(19) Europäisches Patentamt
European Patent Office
Office européen des brevets

(11) Veröffentlichungsnummer: **0 189 072 B1**

# (12) EUROPÄISCHE PATENTSCHRIFT

(45) Veröffentlichungstag der Patentschrift: **14.08.91**

(51) Int. Cl.[5]: **C07C 271/06**, C09D 175/00

(21) Anmeldenummer: **86100292.1**

(22) Anmeldetag: **11.01.86**

(54) **Urethangruppen aufweisende Diisocyanate, ein Verfahren zu ihrer Herstellung und ihre Verwendung als Bindemittel bzw. Bindemittelkomponente in Polyurethanlacken.**

(30) Priorität: **24.01.85 DE 3502265**

(43) Veröffentlichungstag der Anmeldung:
**30.07.86 Patentblatt 86/31**

(45) Bekanntmachung des Hinweises auf die Patenterteilung:
**14.08.91 Patentblatt 91/33**

(84) Benannte Vertragsstaaten:
**AT BE CH DE FR GB IT LI NL SE**

(56) Entgegenhaltungen:
**EP-A- 0 076 715**
**US-A- 3 285 951**

(73) Patentinhaber: **BAYER AG**

**W-5090 Leverkusen 1 Bayerwerk(DE)**

(72) Erfinder: **Pedain, Josef, Dr.**
**Haferkamp 6**
**W-5000 Koeln 80(DE)**
Erfinder: **Riberi, Bernd, Dr.**
**Jakob-Böhmestrasse 2**
**W-5000 Koeln 80(DE)**
Erfinder: **Sonntag, Michael, Dr.**
**Gartenstrasse 27a**
**W-5068 Odenthal(DE)**
Erfinder: **König, Klaus, Dr.**
**Heymannstrasse 50**
**W-5090 Leverkusen 1(DE)**
Erfinder: **Fröhlich, Jürg, Dr.**
**Paffenlöh 36**
**W-5093 Burscheid 1(DE)**

**EP 0 189 072 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft neue, Urethangruppen aufweisende, in Kohlenwasserstofflösungsmitteln lösliche Diisocyanate, ein Verfahren zu ihrer Herstellung und ihre Verwendung als Bindemittel bzw. Bindemittelkomponente in Ein- oder Zweikomponenten-Polyurethanlacken.

Urethangruppen aufweisende Polyisocyanate auf Basis von aromatischen oder aliphatischen Diisocyanaten und niedermolekularen mehrwertigen Alkoholen stellen eine wichtige Gruppe der in der Praxis eingesetzten Lackpolyisocyanate dar (vgl. Kunststoff-Handbuch von G.W. Becker und D. Braun, Carl Hanser Verlag München (1983), Band 7 "Polyurethane", 2. Auflage, insbesondere Kapitel 3.3.2.1).

Derartige Urethangruppen aufweisende Polyisocyanate haben gegenüber den ihnen zugrundeliegenden monomeren Diisocyanaten den Vorteil, daß sie nicht flüchtig und deshalb einfacher und gefahrloser zu handhaben sind. Zu ihrer Herstellung werden im allgemeinen niedermolekulare Polyole wie beispielsweise Glycerin, Trimethylolpropan, Hexantriol und/oder Pentaerythrit, die evtl. im Gemisch mit Diolen vorliegen, mit überschüssigen Mengen einfacher Diisocyanate wie z.B. 2,4-Diisocyanatotoluol, 1-Isocyanato-3,3,5-trimethyl-5-isocyanatomethyl-cyclohexan (Isophorondiisocyanat, abgekürzt: IPDI) oder 1,6-Diisocyanatohexan unter Urethanbildung zur Reaktion gebracht, worauf sich die Entfernung des überschüssigen, nicht umgesetzten Ausgangsdiisocyanats durch Destillation anschließt. Die Urethangruppen aufweisenden Polyisocyanate stellen im allgemeinen harzartige Substanzen dar, die in Lösungsmitteln gelöster Form zur Anwendung gelangen. Als Lösungsmittel werden im allgemeinen polare Lösungsmittel wie Ester der Essigsäure beispielsweise Ethylacetat oder Ethylglykolacetat eingesetzt, die gegebenenfalls im Gemisch mit wenig polaren Lösungsmitteln wie Kohlenwasserstoffen verschnitten sein können. Die ausschließliche Verwendung von Kohlenwasserstoffen als Lösungsmittel ist im allgemeinen nicht möglich, da die Lösungen beim Stehen oder beim Verdünnen von konzentrierten Lösungen auf Verarbeitungskonzentration stark eintrüben und damit für eine Anwendung unbrauchbar werden. Viele Polyesterpolyole und Alkydharze, die als potentielle Reaktionspartner für die Lackpolyisocyanate in Zweikomponenten-Polyurethanlacken eingesetzt werden können, werden in der Praxis ebenfalls in in Kohlenwasserstoffen gelöster Form verwendet. Bedingt durch die schlechte Löslichkeit bzw. Unverträglichkeit der genannten Lackpolyisocyanate des Standes der Technik mit Kohlenwasserstofflösungsmitteln entstehen dann auch beim Vermischen der in Kohlenwasserstofflösungsmitteln gelösten Polyolkomponente mit Lösungen der Lackpolyisocyanate oftmals Trübungen oder Niederschläge, selbst dann wenn die Polyisocyanatkomponente vorher in einem Gemisch aus polaren und apolaren Lösungsmitteln gelöst vorlag. Derartige Trübungen oder Niederschläge führen zu einem Glanzabfall und zu Oberflächenschäden der aus den Lacken hergestellten Beschichtungen.

Die aus den genannten Gründen zwingend erforderliche (Mit) Verwendung von polaren Lösungsmitteln, insbesondere auf Esterbasis, in Zweikomponenten-Polyurethanlacken gemäß Stand der Technik ist im übrigen noch mit dem Nachteil behaftet, daß polare Lösungsmittel wie z.B. die hauptsächlich zur Anwendung gelangenden Ester der Essigsäure im ausgehärteten Lackfilm lange Zeit in kleinen Mengen festgehalten werden. Bei Lacken, die für Außenanwendungen eingesetzt werden und deshalb den Witterungsbedingungen ausgesetzt sind, hydrolysieren diese Ester. Die dabei entstehende Essigsäure hat zwei sehr nachteilige Wirkungen: Sie katalysiert den Abbau des Lackfilms und sie verschlechtert bei Lacken auf Metall den Korrosionsschutz des Lacks. Beides führt zu einer geringeren Haltbarkeit der Lackierung.

Aufgabe der Erfindung war es deshalb, Lackpolyisocyanate zur Verfügung zu stellen, die in wenig polaren aromatischen Kohlenwasserstoffen klar löslich sind und deren Lösungen mit weiteren unpolaren Lösungsmitteln wie aromatischen oder aliphatischen Kohlenwasserstoffen auf die jeweilige Verarbeitungskonzentration weiter verdünnbar sind.

Diese Aufgabe konnte durch die Bereitstellung der nachstehend näher beschriebenen erfindungsgemäßen, Urethangruppen aufweisenden Diisocyanate bzw. dem nachstehend näher beschriebenen erfindungsgemäßen Verfahren zu ihrer Herstellung gelöst werden. Gegenstand der Erfindung sind Diisocyanate der Formel

$$R^1[O\{R^2-O\}_nCO-NH-R^3-NCO]_2$$

wobei

$R^1$ für einen Rest der Formel

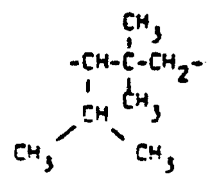

$R^2$ für Reste der Formeln $-CH_2-CH_2-$,

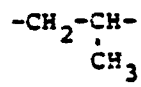

oder $-CO-(CH_2)_5-$,

$R^3$ für den die Isocyanatgruppen von 1,6-Diisocyanatohexan, 1-Isocyanato-3,3,5-trimethyl-5-isocyanatomethyl-cyclohexan, 2,4-Diisocyanatotoluol, 2,6-Diisocyanatotoluol, 2,4'-Diisocyanatodiphenylmethanund/oder 4,4'-Diisocyanatodiphenylmethan verbindenden Kohlenwasserstoffrest, und

n für O, 1 oder 2

stehen.

Gegenstand der Erfindung ist auch ein Verfahren zur Herstellung von diesen Diisocyanaten oder von deren Gemischen mit bis zu 90 Gew.-%, bezogen auf das Gesamtgewicht, an Urethangruppen aufweisen Polyisocyanaten der Formel

$R^4\{O-CO-NH-R^3-NCO)_m$

und/oder mit oligomeren Urethangruppen aufweisenden Polyisocyanaten, die in einer Menge von unter 30 Gew.-%, bezogen auf das Gesamtgewicht der Verfahrensprodukte vorliegen, dadurch gekennzeichnet, daß man Diisocyanate der Formel

$R^3\,(NCO)_2$

mit zweiwertigen Alkoholen der Formel

$R^1[O-(R^2-O-)_nH]_2$

oder mit deren Gemischen mit bis zu 300 Mol-%, bezogen auf diese zweiwertigen Alkohole an Alkoholen der Formel

$R^4(OH)_m$

unter Einhaltung eines NCO/OH-Äquivalentverhältnisses von 1,7:1 bis 15:1 unter Urethanbildung zur Reaktion bringt und anschließend noch vorliegendes Ausgangsdiisocyanat gegebenenfalls bis auf einen Restgehalt der Urethangruppen aufweisenden Polyisocyanate an Urethangruppen-freien Ausgangsdiisocyanaten von maximal 2 % entfernt, wobei

$R^1$, $R^2$, $R^3$ und n die obengenannte Bedeutung haben und

$R^4$ für einen m-wertigen, von $R^1$ verschiedenen, gegebenenfalls Ethergruppen aufweisenden aliphatischen Kohlenwasserstoffrest mit 2 bis 10 Kohlenstoffatomen und

m für 2 oder 3

stehen.

Gegenstand der Erfindung ist auch die Verwendung der erfindungsgemäßen Diisocyanate oder ihrer Gemische mit bis zu 90 Gew.-%, bezogen auf das Gesamtgewicht, an Urethangruppen aufweisenden Polyisocyanaten der Formel

$R^4\{O-CO-NH-R^3-NCO)_m$

und/oder mit oligomeren Urethangruppen aufweisenden Polyisocyanaten, die in einer Menge von weniger

als 30 Gew.-%, bezogen auf Polyisocyanatgemisch, vorliegen, gegebenenfalls in mit Blockierungsmitteln für Isocyanatgruppen blockierter Form, gegebenenfalls in Abmischung mit weiteren, gegebenenfalls blockierten Polyisocyanaten, als Bindemittel oder Bindemittelkomponente in Ein- oder Zweikomponenten-Polyurethanlacken.

Beim erfindungsgemäßen Verfahren werden folgende Ausgangsmaterialien eingesetzt:

1. Diisocyanate der allgemeinen Formel

$R^3(NCO)_2$

in welcher

$R^3$ die bereits oben genannte Bedeutung hat.

Beispiele für derartige Diisocyanate sind 1,6-Diisocyanatohexan, 1-Isocyanato-3,3,5-trimethyl-5-isocyanatomethyl-cyclohexan, 2,4-Diisocyanatotoluol, 2,6-Diisocyanatotoluol, 2,4'-Diisocyanatodiphenylmethan, 4,4'-Diisocyanatodiphenylmethan, sowie aus diesen Verbindungen bestehende Gemische.

2. Aliphatische Diole der allgemeinen Formel

$R^1[O-(R^2-O-)_nH]_2$

in welcher

$R^1$, $R^2$ und n die bereits oben genannte Bedeutung haben.

Besonders bevorzugt werden solche Diole der genannten allgemeinen Formel eingesetzt, für welche n für 0 steht.

Typische Beispiele für derartige Alkohole sind das besonders bevorzugte 2,2,4-Trimethylpentandiol-1,3, dessen Ethergruppen aufweisenden Ethoxylierungs- und/oder Propoxylierungsprodukte, die (im statistischen Mittel) bis zu vier Ethersauerstoffatome pro Molekül aufweisen können oder dessen Estergruppen aufweisenden Additionsverbindungen mit bis zu 4 Mol $\epsilon$-Caprolacton pro Mol an Estergruppen-freiem Diol.

3. Die unter 2. genannten zweiwertigen Alkohole können beim erfindungsgemäßen Verfahren gegebenenfalls in Abmischung mit mehrwertigen Alkoholen der Formel

$R^4(OH)_m$

eingesetzt werden, wobei

$R^4$ und m die bereits obengenannte Bedeutung haben.

Beispiele für derartige mehrwertige Alkohole sind 1,2-Dihydroxyethan, 1,2- und 1,3-Dihydroxypropan, 1,2-, 2,3- und 1,4-Dihydroxybutan, 1,6-Dihydroxyhexan, Neopentylglykol, 1,1,1-Tris-(hydroxymethyl)-propan, (Trimethylolpropan), Glycerin oder Ethoxylierungs- und/oder Propoxylierungsprodukte der genannten einfachen mehrwertigen Alkohole, der der oben gemachten Definition von $R^4$ entsprechenden Art. Beliebige Gemische derartiger Alkohole können selbstverständlich auch eingesetzt werden.

Die hier genannten mehrwertigen Alkohole werden beim erfindungsgemäßen Verfahren, falls überhaupt, in solchen Mengen eingesetzt, daß als Verfahrensprodukte Gemische der oben genannten Art resultieren. Im allgemeinen werden die hier genannten mehrwertigen Alkoholen in Mengen von bis zu 300 Mol-%, vorzugsweise bis zu 100 Mol-%, bezogen auf die erfindungswesentlichen, unter 2. genannten Diole, mitverwendet.

Zur Durchführung des erfindungsgemäßen Verfahrens werden die unter 1. beispielhaft genannten Diisocyanate mit den unter 2. beispielhaft genannten Diolen und gegebenenfalls den unter 3. genannten mehrwertigen Alkoholen unter Einhaltung eines Äquivalentverhältnisses von Isocyanatgruppen zu Hydroxylgruppen von 1,7:1 bis 15:1, vorzugsweise 3:1 bis 8:1 bei 0 bis 150, vorzugsweise 40 bis 120 °C unter Urethanbildung zur Umsetzung gebracht. Hierbei wird vorzugsweise die Alkoholkomponente zu der vorgelegten Isocyanatkomponente gegeben. Die Umsetzung wird vorzugsweise in Abwesenheit von Katalysatoren, insbesondere in Anwesenheit von Trimerisierungskatalysatoren für Isocyanatgruppen durchgeführt. Insbesondere bei niedrigen NCO/OH-Äquivalentverhältnissen innerhalb der genannten Bereiche entstehen bei der Umsetzung auch geringe, die Verwendbarkeit der Verfahrensprodukte jedoch nicht beeinträchtigende Mengen an oligomeren, d.h. kettenverlängerten, Urethangruppen aufweisenden Polyisocyanaten, die dann ebenfalls in Gemisch mit den erfindungsgemäßen Diisocyanaten vorliegen. Ihr Anteil, bezogen auf das Gesamtgewicht der von überschüssigen monomeren Ausgangsdiisocyanat befreiten Verfahrensprodukte, liegt im allgemeinen unter 30, vorzugsweise unter 20 Gewichtsprozent. Im Anschluß an diese Umsetzung wird gegebenenfalls noch vorliegendes überschüssiges, monomeres Ausgangsdiisocyanat gegebenenfalls,

im allgemeinen durch Dünnschichtdestillation, beispielsweise mittels eines Dünnschichtverdampfers, oder durch Extraktion, beispielsweise unter Verwendung von n-Hexan als Extraktionsmittel bis auf einen Restgehalt des Urethangruppen aufweisenden Umsetzungsprodukts an monomerem Diisocyanat von maximal 2, vorzugsweise maximal 1 Gew.-% entfernt.

Bei den bevorzugten erfindungsgemäßen Diisocyanaten bzw. Polyisocyanatgemischen handelt es sich um solche, die nur noch einen Restgehalt an monmerem Ausgangsdiisocyanat von maximal 2, vorzugsweise maximal 1 Gew.-%, bezogen auf die Gesamtmenge aller Urethan- modifizierter Di- und Polyisocyanate, aufweisen.

Die erfindungsgemäßen, Urethangruppen aufweisenden Lackpolyisocyanate sind in Kohlenwasserstoffen wie Benzol, Toluol, Xylol oder anderen Alkylbenzolen klar löslich und verdünnbar. Sie haben zusätzlich eine löslichkeitsvermittelnde Wirkung, so daß sie im Gemisch mit an und für sich unlöslichen, d.h. nicht mit aromatischen Kohlenwasserstoffen verdünnbaren Polyisocyanaten eingesetzt werden können und dieses Gemisch dann ebenfalls im aromatischen Kohlenwasserstoffen löslich und mit diesen ohne Eintrübung verdünnbar ist. Demzufolge weisen nicht nur die reinen erfindungsgemäßen, Urethangruppen aufweisenden Diisocyanate sondern auch ihre Gemische mit Diisocyanaten der Formel

$$R^4 \{ O\text{-}CO\text{-}NH\text{-}R^3\text{-}NCO)_m$$

die genannte Löslichkeit in bzw. Verdünnbarkeit mit aromatischen Kohlenwasserstoffen der beispielhaft genannten Art auf. Diese Löslichkeit bzw. Verdünnbarkeit mit aromatischen Kohlenwasserstoffen wird durch die Blockierung der Isocyanatgruppen nur wenig beeinträchtigt. Geeignete Blockierungsmittel für die erfindungsgemäßen Diisocyanate bzw. deren Gemische mit Polyisocyanaten der zuletzt genannten allgemeinen Formel sind beispielsweise Monophenole wie Phenol, die Kresole, die Trimethylphenole, die tert. Butylphenole; tertiäre Alkohole wie tert. Butanol, tert.-Amylalkohol, Dimethylphenylcarbonol; leicht Enole bildende Verbindungen wie Acetessigester, Acetylaceton, Malonsäurederivate wie Malonsäurediester mit 1 bis 8 C-Atomen in den Alkoholresten; sekundäre aromatische Amine wie N-Methylanilin, die N-Methyltoluidine, N-Phenyltoluidin, N-Phenylxylidin; Imide wie Succinimid; Lactame wie $\epsilon$-Caprolactam, $\delta$-Valerolactam; Oxime wie Butanonoxim, Cyclohexanonoxim; Mercaptane wie Methylmercaptan, Ethylmercaptan, Butylmercaptan, 2-Mercaptobenzthiazol, $\alpha$ -Naphthylmercaptan, Dodecylmercaptan, Triazole wie 1H-1,2,4-Triazol.

Aufgrund ihrer ausgezeichneten Löslichkeit in aromatischen Kohlenwasserstoffen handelt es sich bei den erfindungsgemäßen Diisocyanaten um wertvolle Bindemittel bzw. Bindemittelkomponenten für Ein- und Zweikomponenten-Polyurethanlacke.

Unter "Einkomponenten-Polyurethanlacken" sind in diesem Zusammenhang sowohl feuchtigkeitshärtende Beschichtungsmittel auf Basis von NCO-Prepolymeren als auch hitzevernetzbare Beschichtungsmittel auf Basis von Verbindungen mit gegenüber Isocyanatgruppen reaktionsfähigen Gruppen (die gegebenenfalls reversibel blockiert sein können) und Polyisocyanaten mit blockierten Isocyanatgruppen zu verstehen. Die gegebenenfalls im Gemisch mit anderen Isocyanaten vorliegenden erfindungsgemäßen Diisocyanate können bei der Herstellung der feuchtigkeitshärtenden Beschichtungsmittel als Isocyanatkomponente bei der Herstellung von NCO-Prepolymeren oder aber als Vernetzungsmittel in Abmischung mit NCO-Prepolymeren auf Basis anderer organischer Polyisocyanate verwendet werden. Bei den hitzevernetzbaren Beschichtungsmittel können die erfindungsgemäßen Diisocyanate in blockierter Form als Isocyanatkomponente bzw. als Teil der Isocyanatkomponente zum Einsatz gelangen.

Unter "Zweikomponenten-Polyurethanlacken" sind in obigem Zusammenhang solche Beschichtungsmittel zu verstehen, deren Bindemittel sich aus einer Polyisocyanatkomponente mit freien Isocyanatgruppen und einer Polyolkomponente zusammensetzt, wobei die erfindungsgemäßen Diisocyanate die Polyisocyanatkomponente oder einen Teil der Polyisocyanatkomponente bilden können.

Alle diese an sich bekannten Lacktypen werden vorzugsweise in Form lösungsmittelhaltiger Beschichtungsmittel hergestellt und verarbeitet.

Bei den bevorzugten Einkomponenten-Lacken besteht die wesentliche Bindemittelkomponente im allgemeinen aus einem höhermolekularen, freie Isocyanatgruppen aufweisenden Prepolymeren auf Basis von a) einfachen Diisocyanaten der oben unter 1. beispielhaft genannten Art und b) unterschüssigen Mengen an höhermolekularen Polyhydroxylverbindungen. Bei diesen höhermolekularen Polyhydroxylverbindungen handelt es sich im allgemeinen um Polyester- oder Polyetherpolyole des Molekulargewichtsbereichs 500 bis 4000, die im allgemeinen eine mittlere Funktionalität von 2 bis 4 aufweisen. Besonders gut geeignet sind tert. Stickstoffatome aufweisende Polyetherpolyole des genannten Molekulargewichtsbereichs, die beispielsweise durch Propoxylierung geeigneter, primäre oder sekundäre Aminogruppen aufweisender Startermoleküle zugänglich sind. So kann beispielsweise ein geeignetes Polyetherpolyol durch Propoxylierung von Ethylendiamin erhalten werden.

Neben dieser wesentlichen Bindemittelkomponente enthalten die genannten Einkomponenten-Lacke im allgemeinen noch niedermolekulare Lackpolyisocyanate, da erst durch deren gleichzeitige Mitverwendung im Einkomponenten-Bindemittel die erforderlichen mechanischen Eigenschaften der ausgehärteten Lackschicht erreicht werden. Bislang setzte man hierfür beispielsweise Urethangruppen aufweisende Polyisocyanate wie z.B. das Reaktionsprodukt von 3 Mol 2,4-Diisocyanatotoluol mit 1 Mol Trimethylolpropan ein. Durch die Verwendung der erfindungsgemäßen, Urethangruppen aufweisenden Diisocyanate bzw. deren, obengenannten Gemische mit Urethangruppen aufweisenden Polyisocyanaten der Formel

$R^4 (O\text{-}CO\text{-}NH\text{-}R^3\text{-}NCO)_m$

anstelle der bislang in Einkomponenten-Lacken eingesetzten vergleichsweise niedermolekularen Lackpolyisocyanaten wird nunmehr ein Weg zu Einkomponentenlacken, die mit aromatischen Lösungsmitteln praktisch beliebig verdünnbar sind, eröffnet.

Man erhält auf diesem Wege besonders niedrigviskose hochkonzentrierte, feuchtigkeitshärtende Einkomponentenlacke. Jedoch auch durch Umsetzung der erfindungsgemäßen Diisocyanate mit den beispielhaft genannten höhermolekularen Polyhydroxylverbindungen werden feuchtigkeitshärtende Einkomponentenlacke erhalten, die in aromatischen Kohlenwasserstoffe gelöst und aus aromatischer Lösung verarbeitet werden können.

Die Verwendung der erfindungsgemäßen Diisocyanate bzw. ihrer obengenannten Gemische mit Polyisocyanaten der zuletzt genannten allgemeinen Formel in "Zweikomponenten-Lacken" anstelle der oder in Kombination mit den bislang hierfür eingesetzten Lackpolyisocyanaten bzw. durch Verwendung der entsprechenden blockierten Polyisocyanate in hitzeverletzbaren Einkomponenten-Lacken ist es möglich, auch diese Lacktypen aus aromatischen Lösungsmitteln zu verarbeiten, bzw. mit aromatischen Lösungsmitteln verdünnbar einzustellen. In diesem Zusammenhang muß hervorgehoben werden, daß es, wie bereits oben ausgeführt, oftmals ausreicht, lediglich einen Teil der Polyisocyanatkomponente in den bekannten Zweikomponenten-Lacken durch die erfindungsgemäßen Diisocyanate bzw. Polyisocyanatgemische zu ersetzen, um den genannten Effekt zu erreichen, da die erfindungsgemäßen Diisocyanate oftmals auch eine löslichkeitsvermittelnde Wirkung auf die an sich nicht in aromatischen Lösungsmitteln klar löslichen Lackpolyisocyanate haben.

Bei der erfindungsgemäßen Verwendung der erfindungsgemäßen Diisocyanate bzw. Polyisocyanatgemische kommen, vom genannten (teilweisen) Ersatz der bislang eingesetzten Lackpolyisocyanate durch die erfindungsgemäßen Produkte abgesehen, die an sich bekannten Ausgangsmaterialien und Hilfsmittel zum Einsatz, so daß diesbezüglich auf den einschlägigen Stand der Technik verwiesen werden kann (vgl. z.B. H. Kittel-Lehrbuch der Lacke und Beschichtungen; Band III; Verlag W.A. Colomb 1976). Es sei an dieser Stelle lediglich hervorgehoben, daß die erfindungsgemäßen Diisocyanate bzw. Polyisocyanatgemische insbesondere in Zweikomponenten-Lacken nicht nur mit den oben beispielhaft genannten Polyester- und Polyetherpolyolen sondern auch mit den aus der Polyurethanlackchemie bekannten Polyhydroxypolyacrylaten kombiniert werden können. Auch niedermolekulare, mehrwertige Alkohole eines unter 500 liegenden Molekulargewichts können Teil der Polyolkomponente in solchen Zweikomponenten-Lacken sein.

Sowohl in den genannten Zweikomponenten-Lacken als auch in den hitzevernetzbaren Einkomponenten-Lacken liegen im übrigen die Polyisocyanatkomponente und die Polyolkomponente vorzugsweise in solchen Mengen vor, daß auf jede, gegebenenfalls blockierte Isocyanatgruppe 0,8 bis 3, vorzugsweise 0,9 bis 1,1 Hydroxylgruppen entfallen. Grundsätzlich ist auch möglich, die erfindungsgemäßen Diisocyanate bzw. Polyisocyanatgemische in solchen Lacksystemen einzusetzen, die als gegenüber Isocyanatgruppen reaktionsfähige Verbindungen, gegebenenfalls neben Hydroxylgruppen aufweisenden Verbindungen der beispielhaft genannten Art aminische Kettenverlängerungsmittel aufweisen. Bei diesen aminischen Kettenverlängerungsmittel handelt es sich im allgemeinen um blockierte Polyamine, beispielsweise um Polyketemine oder Oxazolidine, die unter dem Einfluß von Luftfeuchtigkeit freie Aminogruppen bilden. Auch im Falle der Mitverwendung derartiger Verbindungen mit gegenüber Isocyanatgruppen reaktionsfähigen Gruppen gelten die oben gemachten Ausführungen bezüglich der Äquivalentverhältnisse, wobei die (blockierten) Aminogruppen die Hydroxylgruppen ganz oder teilweise ersetzen können.

Die die erfindungsgemäßen Diisocyanate bzw. Polyisocyanatgemische als Bindemittelkomponente enthaltenden Lacke eignen sich insbesondere gut für die Lackierung von Holz, sie sind jedoch auch gut zur Lackierung von metallischen Substraten geeignet. Die Lackfilme sind wärmefarbstabil, weisen eine ausgezeichnete Abriebfestigkeit auf und zeichnen sich darüber hinaus durch eine hohe Härte, sehr gute Elastizität und Chemikalienbeständigkeit sowie einen hohen Glanz aus.

In den folgenden Beispielen beziehen sich alle Prozentangaben auf Gewichtsprozente und alle Angaben in "Teilen" auf Gewichtsteile.

Beispiel 1 (Herstellungsbeispiel)

4002 g Diisocyanatotoluol (Gemisch des 2,4- und 2,6-Isomeren im Verhältnis 4:1) werden auf 60 °C erhitzt. In dieses Diisocyanat trägt man ein Gemisch von 134 g Trimethylolpropan und 341,8 g 2,2,4-Trimethylpentandiol-1,3 ein und erhöht die Temperatur innerhalb von 2-3 Stunden auf 100 °C. Danach verändert sich der NCO-Gehalt nicht mehr. Das Rohprodukt wird über eine Dünnschichtdestillationsapparatur bei 150 °C/0,1 mm vom überschüssigen monomeren Diisocyanat befreit. Man erhält 1750 g Rückstand als ein viskoses Harz, das mit wasserfreiem Xylol zu einer 75 %igen Lösung in Xylol ausgelöst wird. Die klare Lösung hat einen NCO-Gehalt von 13,4 %, eine Farbzahl APHA von 30 (DIN 53 409) und einen Restgehalt an freiem Diisocyanat von 0,1 %.

Die Viskosität der Lösung beträgt 2300 mPas/23 °C, sie ist mit Xylol, Toluol oder Alkylbenzol-Gemischen beliebig verdünnbar.

Eine gelchromatographische Analyse zeigt, daß der Feststoff dieser Lösung zu ca. 55,5 % aus dem erfindungsgemäßen Addukt aus 1 Mol 2,2,4-Trimethylpentandiol-1,3 und 2 Mol Toluylendiisocyanat, zu ca. 29,3 % aus dem Addukt aus 1 Mol Trimethylolpropan und 3 Mol Toluylendiisocyanat und zu ca. 15,2 % aus höhermolekularen Anteilen besteht.

Beispiel 2 (Verwendungsbeispiel)

Dieses Beispiel zeigt die Herstellung eines in Xylol löslichen Zweikomponenten-Lacks, der allen, an einen hochwertigen Möbellack gestellten Anforderungen genügt.

Als Polyolkomponente wird ein Alkydharz eingesetzt, das man durch übliche Schmelzkondensation aus 298 Teilen Erdnußölfettsäure, 350 Teilen Phthalsäureanhydrid, 7 Teilen Maleinsäureanhydrid, 88 Teilen Triethylenglykol und 320 Teilen Trimethylolpropan herstellt. Es wird 70 %ig in Xylol gelöst. Die Lösung hat eine Hydroxylzahl von 93 und eine Säurezahl von 15.

100 Teile der Polyollösung werden mit 57 Teilen der Polyisocyanatlösung aus Beispiel 1 vermischt und mit 53 Teilen Xylol auf Verarbeitungsviskosität verdünnt. Die Verarbeitungszeit des so hergestellten Klarlacks beträgt 56 Stunden.

Eigenschaften des Lackfilms:

Die Ausprüfung erfolgte an Filmen auf Metall, die mit einer 210 µm Lackhantel aufgetragen wurden.

1) Anlösbarkeit nach 14 d

| (Einwirkung 1 min) | Xylol | Ethylglykolacetat | Ethylacetat | Aceton | Superbenzin |
|---|---|---|---|---|---|
| o = Film völlig unverändert ↓ 4 = Film wird aufgelöst | 0 | 0 | 1 | 2 | 0 |

2) Pendelhärte nach König

| (DIN 53 157) | nach 24 h | 3 d | 7 d | 14 d |
|---|---|---|---|---|
| | 110 | 161 | 183 | 195 |

3) Tiefung nach Erichsen

| | | | | |
|---|---|---|---|---|
| (DIN 53 156) bei 47-55 µ Schichtdicke | 6 | 7 | 5,1 | 4,8 |

4) Dornbiegetest

(nach DIN 53 152) 32 - 8 in Ordnung, ab 6 gerissen (51 µ)

Der beschriebene Klarlack eignet sich insbesondere zur Lackierung von Holzgegenständen (Möbeln).

Beispiele 3 bis 17 (Herstellungsbeispiele)

Die Beispiele 3 bis 17 sind in der nachstehenden Tabelle zusammengefaßt. Die Beispiele 3 bis 13 stellen erfindungsgemäße Beispiele, die Beispiele 14 bis 17 Vergleichsbeispiele dar.

Die Herstellung der in der Tabelle aufgelisteten Umsetzungsprodukte erfolgt in völliger Analogie zur Verfahrensweise gemäß Beispiel 1: Umsetzung der Polyole mit überschüssigem Diisocyanat, Entfernung des überschüssigen, für die Umsetzung nicht benötigten Diisocyanats durch Dünnschichtdestillation und anschließendes Lösen des als Destillationsrückstand anfallenden Verfahrensprodukts.

Als Diisocyanate werden eingesetzt:

HDI: 1,6-Diisocyanatohexan;
IPDI: Isophorondiisocyanat;
TDI: 2,4- und 2,6-Diisocyanatotoluol im Gewichtsverhältnis 4:1.

Wie aus den tabellarisch mitgeteilten Daten ersichtlich, sind die Produkte gemäß Beispielen 14 bis 17 in Xylol bzw. Toluol nicht löslich; auch ihre Lösungen in polaren Lösungsmitteln können nur in sehr geringem Umfang mit diesen Kohlenwasserstoffen verdünnt werden. Die erfindungsgemäßen Produkte sind demgegenüber in Kohlenwasserstoffen der genannten Art löslich und mit diesen verdünnbar. Dabei können Feststoffkonzentrationen erreicht werden, die allen, auch extremen diesbezüglichen Anforderungen genügen. (Die mitgeteilte Verdünnbarkeit bezieht auf den erreichbaren Feststoffgehalt).

Tabelle

| Beisp. | Mol Diisocyanat | | Mol Trimethyl-pentandiol-1,3 | Mol Trimethylol-propan | Mol Neo-pentylglykol | Mol Diethylen-glykol | Lösungs-mittel | Konz. der Lösung (%) | NCO der Lösung (%) |
|---|---|---|---|---|---|---|---|---|---|
| 3 | 6 | HDI | 1 | | | | - | 100 | 15,3 |
| 4 | 6 | TDI | 1 | | | | Xylol | 75 | 12,8 |
| 5 | 6 | IPDI | 1 | | | | " | 75 | 10,0 |
| 6 | 6 | TDI | 0,5 | | 0,5 | | Butylacetat | 75 | 12,9 |
| 7 | 8 | TDI | 0,7 | 0,3 | | | Xylol | 75 | 12,8 |
| 8 | 6 | IPDI | 0,61 | 0,26 | | | " | 75 | 10,8 |
| 9 | 6 | TDI | 0,3 | 0,25 | 0,3 | | " | 75 | 13,5 |
| 10 | 6 | TDI | 0,4 | 0,2 | 0,3 | | " | 75 | 13,65 |
| 11 | 6 | TDI | 0,325 | 0,25 | | 0,3 | " | 75 | 13,5 |
| 12 | 9 | TDI | 0,325 | 0,25 | | 0,3 | " | 75 | 14 |
| 13 | 6 | IPDI | 0,3 | 0,25 | 0,3 | | " | 75 | 10,8 |
| 14 | 6 | TDI | | | 1 | | Butylacetat | 75 | 13,3 |
| 15 | 6 | TDI | | 0,26 | 0,61 | | " | 75 | 13,2 |
| 16 | 6 | TDI | | 0,52 | | 0,22 | " | 75 | 13,7 |
| 17 | 6 | TDI | | 0,52 | 0,22 | | " | 75 | 13,8 |

**Tabelle** (Fortsetzung)

| Bsp. Nr. | Viskosität der Lösung (mPas) | Rest-Diisocyanat (%) | Verdünnbark. mit Xylol/Toluol | Bemerkungen |
|---|---|---|---|---|
| 3 | 6300 | 0,03 | bis unter 1 % | Dieses Produkt ist auch mit einem Gemisch von Alkylbenzolen verdünnbar |
| 4 | 900 | 0,07 | bis unter 5 % | auch mit Alkylbenzolgemisch verdünnbar |
| 5 | 3200 | 0,20 | bis unter 1 % | auch mit Alkylbenzolgem. u. Benzin verdünnbar |
| 6 | 830 | 0,15 | bis unter 1 % | |
| 7 | 6000 | 0,13 | bis unter 1 % | auch mit Alkylbenzolgemisch verdünnbar |
| 8 | 6200 | 0,4 | bis unter 1 % | verdünnbar mit Benzin und Alkylbenzolgemisch |
| 9 | 2000 | 0,44 | bis unter 15 % | |
| 10 | 2200 | 0,05 | bis unter 15 % | |
| 11 | 1600 | 0,08 | bis unter 15 % | |
| 12 | 1600 | 0,07 | bis unter 10 % | |
| 13 | 4200 | 0,28 | bis unter 5 % | |
| 14 | 1300 | 0,13 | nur bis ca. 40 % | Prod. in Xylol u. Toluol n. lösl., fällt aus |
| 15 | 5500 | 0,11 | nur bis ca. 67 % | Prod. in reinem Xylol u. Toluol unlöslich |
| 16 | 2300 | 0,09 | nur bis ca. 60 % | " " " " o. " " |
| 17 | 2500 | 0,12 | nur bis ca. 60 % | " " " " " " " |

Beispiel 18 (Verwendung)

Dieses Beispiel beschreibt die Herstellung und die Eigenschaften eines feuchtigkeitshärtenden Einkomponentenlacks, der hochkonzentriert in Xylol als einzigem Lösungsmittel hergestellt und transportiert und am Verarbeitungsort mit Xylol oder anderen Kohlenwasserstoffen auf Verarbeitungskonzentration verdünnt

werden kann.

Das zur Herstellung des Einkomponenten-Lackes benötigte, höhermolekulare, freie Isocyanatgruppen aufweisende Prepolymere wird wie folgt hergestellt:

7400 g eines Polyetherpolyols der Hydroxylzahl 61, hergestellt durch Propoxylierung von Ethylendiamin, werden mit 1330 g 2,4-Diisocyanatotoluol vermischt und bei 60 bis 80 °C während 3 Stunden zur Reaktion gebracht. Das resultierende, Isocyanatgruppen aufweisende Polyether-Prepolymer wird 75 %ig in Xylol gelöst.

944 g der Prepolymerlösung werden dann mit 1465 g der erfindungsgemäßen Polyisocyanatlösung gemäß Beispiel 7 vermischt und die Mischung mit 130 g Xylol versetzt. Man erhält eine klare, nur sehr schwach gelblich gefärbte ca. 70 %ige Xylol-Lösung eines feuchtigkeitshärtenden Einkomponentenlacks.

NCO-Gehalt: 7,8 %
Viskosität bei 23 °C: 500 mPas
Xylol-Verdünnbarkeit: <10 %
Verdünnbarkeit mit technischem Alkylbenzolgemisch: <10 %
Farbzahl (DIN 1662): 1

Eigenschaften des Lackes

Der Lack wird mit Xylol auf eine Verarbeitungskonzentration von 45 % eingestellt, mit 0,5 % Dibutylzinndilaurat als Katalysator versetzt und mit einer Lackhantel (Spaltbreite 0,12 mm) auf Glasplatten aufgetragen.

Eigenschaften:
Sandtrocknung (DIN 53 150): 2 h
Pendelhärte n. König (DIN 53 157): nach 24 h: 150
Anlösbarkeit nach 24 h: (Einwirkung 1 min)

| Xylol | Ethylglykol-acetat | Ethylacetat | Aceton | Superbenzin |
|---|---|---|---|---|
| 0 | 0 | 0 | 1 | 0 |

0 = Film völlig unverändert
↓
4 = Film wird aufgelöst

Abrieb nach DIN 53 109 (CS 10/1000 U/10 N) : 20 mg

Diese Eigenschaften zeigen, daß mit Hilfe der erfindungsgemäßen Produkte ein hochwertiger Einkomponenten-PUR-Lack hergestellt werden kann, der in aromatischem Kohlenwasserstoff als einzigem Lösemittel verarbeitet werden kann. Besonders günstig ist, daß durch die Möglichkeit nur dieses Lösemittel zu verwenden, auch blasenfreie Dickschichtlacke mit etwa 1 mm Dicke hergestellt werden können.

**Patentansprüche**

**1.** Diisocyanate der Formel

$$R^1 [O(R^2\text{-}O)_n CO\text{-}NH\text{-}R^3\text{-}NCO]_2$$

wobei

$R^1$ für einen Rest der Formel

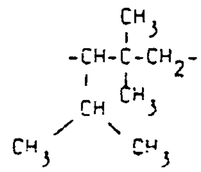

$R^2$ für Reste der Formeln $-CH_2-CH_2-$,

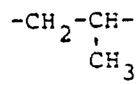

oder $-CO-(CH_2)_5-$,

$R^3$ für den die Isocyanatgruppen von 1,6-Diisocyanatohexan, 1-Isocyanato-3,3,5-trimethyl-5-isocyanatomethyl-cyclohexan, 2,4-Diisocyanatotoluol, 2,6-Diisocyanatotcluol, 2,4'-Diisocyanatodiphenylmethanund/oder 4,4'-Diisocyanatodiphenylmethan verbindenden Kohlenwasserstoffrest, und

n für 0, 1 oder 2

stehen.

**2.** Verfahren zur Herstellung von Diisocyanaten gemäß Anspruch 1 oder von deren Gemischen mit bis zu 90 Gew.-%, bezogen auf das Gesamtgewicht, an Urethangruppen aufweisenden Polyisocyanaten der Formel

$R^4 \leftarrow (O-CO-NH-R^3-NCO)_m$

und/oder mit oligomeren Urethangruppen aufweisenden Polyisocyanaten, die in einer Menge von unter 30 Gew.-%, bezogen auf das Gesamtgewicht der Verfahrensprodukte vorliegen, dadurch gekennzeichnet, daß man Diisocyanate der Formel

$R^3(NCO)_2$

mit zweiwertigen Alkoholen der Formel

$R^1[O-(R^2-O-)_nH]_2$

oder mit deren Gemischen mit bis zu 300 Mol-%, bezogen auf diese zweiwertigen Alkohole an Alkoholen der Formel

$R^4(OH)_m$

unter Einhaltung eines NCO/OH-Äquivalentverhältnisses von 1,7:1 bis 15:1 unter Urethanbildung zur Reaktion bringt und anschließend noch vorliegendes Ausgangsdiisocyanat gegebenenfalls bis auf einen Restgehalt der Urethangruppen aufweisenden Polyisocyanate an Urethangruppen-freien Ausgangsdiisocyanaten von maximal 2 % entfernt, wobei

$R^1$, $R^2$, $R^3$ und n die in Anspruch 1 genannte Bedeutung haben und

$R^4$ für einen m-wertigen, von $R^1$ verschiedenen, gegebenenfalls Ethergruppen aufweisenden aliphatischen Kohlenwasserstoffrest mit 2 bis 10 Kohlenstoffatomen und

m für 2 oder 3

stehen.

3. Verwendung der Diisocyanate gemäß Anspruch 1 oder ihrer Gemische mit bis zu 90 Gew.-%, bezogen auf das Gesamtgewicht, an Urethangruppen aufweisenden polyisocyanaten der Formel

$R^4 (O\text{-}CO\text{-}NH\text{-}R^3\text{-}NCO)_m$

in welcher

$R^3$ die in Anspruch 1 genannte Bedeutung und

$R^4$ und m die in Anspruch 2 genannte Bedeutung haben

und/oder mit oligomeren Urethangruppen aufweisenden Polyisocyanaten, die in einer Menge von weniger als 30 Gew.-%, bezogen auf das Polyisocyanatgemisch, vorliegen, gegebenenfalls in mit Blockierungsmitteln für Isocyanatgruppen blockierter Form, gegebenenfalls in Abmischung mit weiteren, gegebenenfalls blockierten Polyisocyanaten, als Bindemittel oder Bindemittelkomponente in Ein- oder Zweikomponenten-Polyurethanlacken.

## Claims

1. Diisocyanates corresponding to the following formula

$R^1 [O(R^2\text{-}O)_nCO\text{-}NH\text{-}R^3\text{-}NCO]_2$

in which

$R^1$ is a group corresponding to the formula

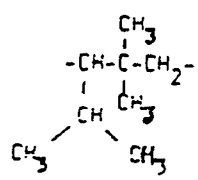

$R^2$ represents groups corresponding to the formula $-CH_2\text{-}CH_2\text{-}$,

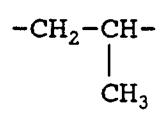

or $-CO\text{-}(CH_2)_5\text{-}$,

$R^3$ represents the hydrocarbon radical connecting the isocyanate groups of 1,6-diisocyanatohexane, 1-isocyanato-3,3,5-trimethyl-5-isocyanatomethyl cyclohexane, 2,4-diisocyanatotoluene, 2,6-diisocyanatotoluene, 2,4'-diisocyanatodiphenyl methane and/or 4,4'-diisocyanatodiphenyl methane and

n is the number 0, 1 or 2.

2. A process for the production of the diisocyanates claimed in claim 1 or mixtures thereof with up to 90% by weight, based on the total weight, of polyisocyanates containing urethane groups corresponding to the following formula

$R^4 (O\text{-}CO\text{-}NH\text{-}R^3\text{-}NCO)_m$

and/or with polyisocyanates containing oligomeric urethane groups which are present in a quantity of less than 30% by weight, based on the total weight of the end products, characterized in that diisocyanates corresponding to the following formula

$R^3(NCO)_2$

are reacted with dihydric alcohols corresponding to the following formula

$R^1[O\text{-}(R^2\text{-}O\text{-})_nH]_2$

and/or with mixtures thereof with up to 300 mol-%, based on these dihydric alcohols, of alcohols corresponding to the formula

$R^4(OH)_m$

in an NCO/OH equivalent ratio maintained at 1.7:1 to 15:1, to form urethanes and any starting diisocyanate still present is optionally removed to a residual content in the polyisocyanates containing urethane groups of starting diisocyanates free from urethane groups of at most 2%,

$R^1$, $R^2$, $R^3$ and n being as defined in claim 1 and
$R^4$ representing an m-functional, aliphatic $C_{2-10}$ hydrocarbon radical optionally containing ether groups which is different from $R^1$ and
m being the number 2 or 3.

**3.** The use of the diisocyanates claimed in claim 1 or mixtures thereof with up to 90% by weight, based on the total weight, of polyisocyanates containing urethane groups corresponding to the following formula

$R^4$ (O-CO-NH-$R^3$-NCO)m

in which
$R^3$ is as defined in claim 1 and
$R^4$ and m are as defined in claim 2,

and/or with polyisocyanates containing oligomeric urethane groups which are present in a quantity of less than 30% by weight, based on the polyisocyanate mixture, optionally blocked with blocking agents for isocyanate groups and optionally in admixture with other optionally blocked polyisocyanates
as a binder or binder component in one-component or two-component polyurethane paints.

## Revendications

**1.** Diisocyanates de formule :

$R^1\{O\text{-}(R^2\text{-}O\text{-})\text{-}_n\ CO\text{-}NH\text{-}R^3\text{-}NCO]_2$

dans laquelle :
$R^1$ représente un reste de formule :

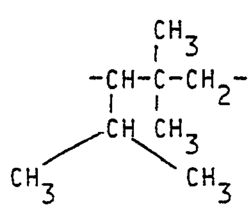

$R^2$ représente des restes répondant aux formules $-CH_2-CH_2-$,

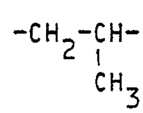

ou $-CO-(CH_2)_5-$,

$R^3$ représente le reste hydrocarboné reliant les groupes isocyanates du 1,6-diisocyanatohexane, du 1-isocyanato-3,3,5-triméthyl-isocyanatométhyl-cyclohexane, du 2,4-diisocyaantotoluène, du 2,6-diisocyanatotoluene, du 2,4'-diisocyanatodiphénylméthanne et/ou du 4,4'-diisocyanatodiphénylméthane, et

n vaut 0, 1 ou 2.

**2.** Procédé pour préparer des diisocyanates selon la revendication 1, ou leurs mélanges avec jusqu'à 90% en poids, sur la base du poids total, de polyisocyanates présentant des groupes uréthannes et répondant à la formule :

$R^4 \text{-}(O\text{-}CO\text{-}NH\text{-}R^3\text{-}NCO)_m$

et/ou de polyisocyanates oligomères présentant des groupes uréthanne qui sont présents en une quantité inférieure à 30j en poids, par rapport au poids total des produits du procédé, procédé caractérisé en ce qu'on fait réagir avec formation de groupes uréthannes, des diisocyanates de formule :

$R^3(NCO)_2$

avec des alcools divalents (ou des dialcools) de formule :

$R^1[O\text{-}(R^2\text{-}O\text{-})_nH]_2$

ou avec leurs mélanges avec jusqu'à 300 mol %, par rapport à ces dialcools et d'alcools de formule :

$R^4(OH)_m$

en maintenant un rapport de 1,7 : 1 à 15 : 1 entre les équivalents de NCO/OH, et en ce qu'on élimine ensuite éventuellement le diisocyanate de départ, dépourvu de groupe uréthanne, jusqu'à obtenir une teneur résiduelle d'au maximum 2% en ce diisocyanate dans les polyisocyanates présentant des groupes uréthannes,

les symboles $R^1$, $R^2$, $R^3$ et n ayant le sens indiqué à la revendication 1, et

$R^4$ représente un reste d'hydrocarbure aliphatique, de valence m comportant éventuellement des groupes éthers et qui est différent de $R^1$, ce reste comportant deux à dix atomes de carbone, et

m vaut 2 ou 3.

**3.** Utilisation des diisocyanates selon la revendication 1, ou de leurs mélanges avec jusqu'à 90% en poids, par rapport au poids total, de polyisocyanates présentant des groupes uréthannes et répondant à la formule :

$R^4\text{-}(O\text{-}CO\text{-}NH\text{-}R^3\text{-}NCO)_m$

dans laquelle

$R^3$ a le sens indiqué à la revendication 1, et

$R^4$ et m ont le sens indiqué à la revendication 2,

et/ou avec des polyisocyanates oligomères présentant des groupes uréthannes, qui sont présents en une quantité inférieure à 30% en poids, sur la base du mélange des polyisocyanates sous forme bloquée ou coiffée à l'aide d'agents de blocage pour des groupes isocyanates, éventuellement en mélange avec d'autres polyisocyanates éventuellement bloqués, à titre de liants ou de composants de liants dans des vernis de polyuréthanne à un composant ou à deux composants.